# EUROPEAN PATENT APPLICATION

(11) **EP 4 852 341 A1**
(43) Date of publication of application: **09.12.2026**
(21) Application number: 25180145.2
(22) Date of filing: 02.06.2025
(51) Int. Cl.: H04B 7/185, H04W 56/00

(54) **DOWNLINK COMMUNICATION USING TERRESTRIAL AND NON-TERRESTRIAL NETWORKS**

(71) Applicant: Vodafone Group Services Limited, Newbury RG14 2FN (GB)
(72) Inventor: MARTINS, Diogo, London, W2 6BY (GB); BOUKLEY HASAN, Wael, London, W2 6BY (GB)
(74) Representative: Boult Wade Tennant LLP

(57) **Abstract**

Downlink communication is provided on a cellular network that comprises a Terrestrial Network (TN) part and a Non-Terrestrial Network (NTN) part. A first portion of a Synchronization Signal Block (SSB) of a downlink is communicated from the TN part of the cellular network, and a second portion of the SSB of the downlink, different from the first portion, is communicated from the NTN part of the cellular network.

## Description

### Technical Field of the Disclosure

The disclosure concerns downlink communication on a cellular network that comprises a Terrestrial Network (TN) part and a Non-Terrestrial Network (NTN) part. This can be implemented as a method and/or a computer program, for example, or in a cellular network controller or User Equipment (UE).

### Background to the Disclosure

The Third Generation Partnership Project (3GPP) has been investigating the introduction of Non-Terrestrial Networks (NTN) alongside existing Terrestrial Networks (TN), for example as discussed in 3GPP TSG RAN WG1 RP-171450. This has been developed in 5G New Radio (NR) and is expected to continue for 6G, with tight integration between terrestrial and non-terrestrial networks, not just in terms of position estimation, but also parameter estimation and radio signal diversity (see Saleh, Sharief, et al. "Integrated 6G TN and NTN Localization: Challenges, Opportunities, and Advancements." arXiv preprint arXiv:2501.13488 (2025)).

In 5G systems, the NR NTN systems were designed to reuse the same air interface signals and channels as the TN, with the work focusing on enhancements to cope with impact due to delay and doppler shift resulting from the velocity of the satellite providing connectivity. With 3GPP Release 17 NR-NTN, the UE uses a location for it from a Global Navigation Satellite System (GNSS) and a location and velocity for the satellite (derived from the System Information Block, SIB) to calculate the downlink doppler shift and timing errors received by the UE, and, the amount of frequency pre-compensation and timing advance for that UE to apply so that the uplink transmissions from all the UEs in the (large) cell arrive 'on time' and 'on-frequency' at the gNB function (see 3GPP TSG RAN RP-230667).

Current approaches towards improvements for NTN in 6G mainly seem to focus on mitigating any impact of such NTN and TN coexisting with each other (see Guidotti, Alessandro, et al. "Role and evolution of non-terrestrial networks towards 6G systems." IEEE Access (2024)). However, it would be desirable to focus instead on increasing NTN and TN cooperation to act as a single network. This may improve or enhance energy efficiency and/or spectrum efficiency.

### Summary of the Disclosure

Against this background, the present disclosure provides a method for downlink communication on a cellular network that comprises a Terrestrial Network (TN) part and a Non-Terrestrial Network (NTN) part according to claim 1, a cellular network controller as defined by claim 12 and a User Equipment (UE) for a cellular network in accordance with claim 13. Other preferred features are disclosed with reference to the claims and in the description below.

The disclosure envisages one of a Terrestrial Network (TN) and a Non-Terrestrial Network (NTN) (of the same cellular network) assisting the other in the downlink, by each transmitting part a Synchronization Signal Block (SSB). In this way, the User Equipment (UE) receives part of the downlink SSB from the TN and the remainder from the NTN. In practice, one of the TN and NTN may be providing access coverage in a geographical area (and may be termed a main network) and the other (which might be termed an auxiliary network) may therefore be providing assistance by transmitting the part of the SSB.

The SSB comprises: a Primary Synchronization Signal (PSS); a Secondary Synchronization Signal (SSS); and a Physical Broadcast Channel (PBCH). The main network may transmit the SSS and optionally the PBCH. The auxiliary network may transmit the PSS and, in some embodiments, the PBCH. If the auxiliary network transmits the PBCH, the PBCH may also include an indication of a Physical Cell Index (PCI) to which the PBCH applies (because it may be difficult for the UE to determine this otherwise).

In embodiments, the TN is the main network (that is, providing access by a UE to the cellular network) and/or the NTN does not allow access by a UE to the cellular network in a geographical region covered by the TN. Then, the NTN may transmit part of the SSB downlink applicable to the TN. A geographical coverage area of the NTN may overlap with multiple TN cells. In this case, the part of the SSB transmitted by the NTN may be applicable to those multiple cells.

In other embodiments, the NTN is the main network (that is, providing access by a UE to the cellular network). Then, the TN transmits part of the SSB downlink applicable to the NTN. In this case, the TN may transmit a PSS for the NTN.

An indicator may be transmitted (for the main network or auxiliary network) to let the UE know that the SSB is split between TN and NTN (or at least a portion of the SSB is being transmitted by the NTN).

The downlink communication from the TN and NTN advantageously uses the same frequency (in terms of carrier and/or allocation, for instance). In this case, the transmissions of the SSB parts may be at different times (that is, time division duplex). Alternatively, the TN and NTN downlinks may use different frequencies. In this case, the transmissions of the SSB parts may be at the same time.

The approach of this disclosure may be implemented as: a method at the cellular network (NTN and/or TN) and/or at one or more UEs; a device, for instance a cellular network controller that controls each or both of the TN and NTN, or a UE; and a computer program (configured to perform the method when operated by a processor).

The UE may have multiple RF interfaces (comprising a transmitter, receiver and/or antenna, for instance), each for communicating with the TN or NTN. Then, one RF interface of the UE may be used for cellular network access (to the main network) and the other may be used for receiving part of the SSB (from the auxiliary network), beneficially without accessing the cellular network. The RF interface used for receiving part of the SSB from the auxiliary network may be deactivated when not receiving the SSB part, for example to save power.

Aspects may be applied individually or in combination. Any approaches or aspect according to the disclosure may be implemented as software and/or hardware, for example in the form of a controller.

### Brief Description of the Drawings

The approach of the disclosure may be put into practice in various ways, one of which will now be described by way of example only and with reference to the accompanying drawings in which:
Figure 1 schematically depicts an existing structure of a Synchronization Signal Block (SSB); and
Figure 2 schematically depicts an example configuration permitting coexistence of terrestrial and non-terrestrial cellular RANs.

### Detailed Description of Preferred Embodiments

The Synchronization Signal Block (SSB), sometimes termed the SS/PBCH (Physical Broadcast Channel) block, is a key part of NR RAN, as described in 3GPP Technical Specification (TS) 38.211 v.18.6.0, section 7.4.3. It helps with initial cell search, beam and cell measurements, radio link monitoring, and identifying new beams during beam recovery. The inventors have appreciated that communication (transmission by the network and/or reception by the UE) of the SSB in the downlink can be advantageously apportioned between a Terrestrial Network (TN) and a Non-Terrestrial Network (NTN) to improve the network and UE communication.

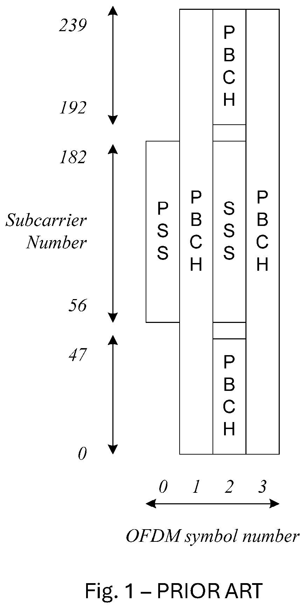

Referring to Figure 1, there is schematically depicted an existing structure of a SSB for NR. The SSB is communicated over four OFDM symbols, each of which spans 240 subcarriers. The block includes: a Primary Synchronization Signal (PSS) that is sent in the first symbol; a Secondary Synchronization Signal (SSS), sent in the third symbol; and the PBCH, transmitted in the second, third and fourth symbols. These signals are arranged in concatenated symbols, in a similar structure to that used in 4G LTE. The PSS and the SSS each occupy 127 central subcarriers of one symbol. The PBCH is spread across three OFDM symbols and 240 subcarriers. In a PBCH symbol, there are unused subcarriers in the middle where SSS is transmitted.

The SSB is transmitted at a higher power than the remaining signals or channels of NR (similar to LTE), with the power configuration of such channels being based on offsets compared to SSB. This is to allow UEs to perform synchronization and measurements adequately towards the gNB. When a UE is powered on, it performs an initial cell search, which is the procedure by which a UE acquires time and frequency synchronization with a cell and detects the Cell ID of that cell. Cell search for NR is based on the primary and secondary synchronization signals, and PBCH DMRS (Demodulation Reference Signal), located on the synchronization raster.

A UE assumes that reception occasions of a PBCH, PSS, and SSS are in consecutive symbols, as defined in 3GPP TS 38.211 v.18.6.0, thereby forming the SSB. The SSS, PBCH DM-RS, and PBCH data have the same Energy Per Resource Element (EPRE), but the ratio of PSS EPRE to SSS EPRE in a SSB is either 0 dB or 3 dB. The UE may thus assume these characteristics in any received SSB.

To access a 5G network, the UE detects the PSS and the SSS. How to detect such signals is left to UE implementation. Those synchronization signals allow time and frequency correction, and Cell Id detection. Chapter 7.1.5 of 3GPP Technical Report (TR) 38.802 v.14.2.0 defines a target requirement for PSS/SSS detection by a UE in cellular network of "good one-shot detection probability at -6 dB received baseband SNR condition with less than 1% false alarm rate" and "robustness against initial frequency offset up to 5 ppm". According to section 7.3.2.3.1 of 3GPP TR 38.811 v.15.4.0, it was expected that these requirements (SNR level of -6 dB, frequency error robustness of 5 ppm and 1% false alarm) defined for TN will be kept the same for a UE accessing an NTN. This was stated "even if the SNR level of NTN systems is typically in the range of -3 to 13 dB SNR".

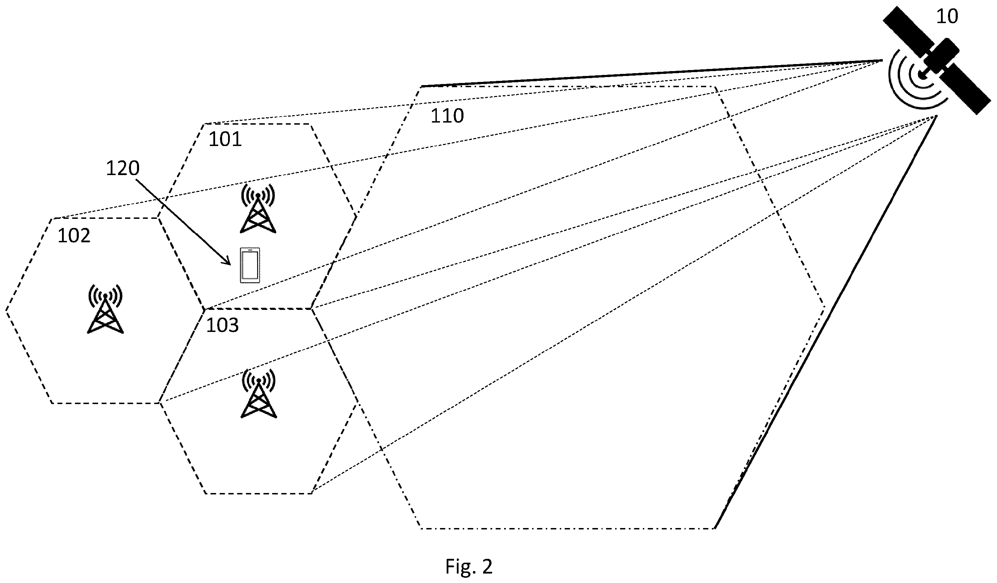

Referring to Figure 2, there is schematically depicted an example configuration permitting coexistence of terrestrial and non-terrestrial cellular RANs. In this configuration, three terrestrial RAN (TN) cells are shown: a first cell 101; a second cell 102 and a third cell 103, each of which has a corresponding terrestrial base station. The first cell 101, second cell 102 and third cell 103 may provide coverage across an urban area, for instance. A satellite 10 also provides a non-terrestrial RAN (NTN) cell 110. The non-terrestrial RAN cell 110 provides a coverage area outside the coverage areas of the first cell 101, second cell 102 and third cell 103, for example in a non-urban or rural area. The NTN also provides some overlapping coverage for the TN first cell 101, second cell 102 and third cell 103 (as shown by the upper dotted lines to the top left corner of the respective cell and lower dotted lines to the bottom right corner of the respective cell).

It will be appreciated that this schematic depiction is an illustrative example only. In reality, coverage areas may not have a clear demarcation and/or may overlap. Also, the shape of a coverage area is rarely regular in nature. The size of a cell (and/or the number of cells) provided by a non-terrestrial RAN will likely differ significantly from that shown, which is simplified for illustrative purposes.

A user terminal (which may equivalently be termed a mobile terminal or using 3GPP terminology, a User Equipment or UE) 120 may be receiving service from the terrestrial RAN, for example from the first cell 101, due to the location of the user terminal 120. If the user terminal 120 moves within the coverage areas provided by the terrestrial RAN, for example from the first cell 101 to the second cell 102 or the third cell 103, handover allows the user terminal 120 to receive continuous and/or uninterrupted service from the terrestrial RAN.

If the user terminal 120 leaves the coverage areas provided by the terrestrial RAN, for example entering the coverage area of the non-terrestrial RAN cell 110, handover is beneficially also possible from the terrestrial RAN (for instance, the first cell 101) to the non-terrestrial RAN cell 110. This may be achieved in accordance with existing arrangements, for instance as discussed with reference to Figure 1 above or using other known approaches.

Advantageously, the non-terrestrial RAN additionally provides some coverage within the coverage area of the terrestrial RAN. This may allow the NTN to assist the TN. A key benefit of the non-terrestrial RAN may be to provide coverage in regions where the terrestrial RAN cannot. Nevertheless, the TN may also be able to assist the NTN in areas of overlapping coverage.

As noted above, the present disclosure proposes dividing communication (transmission and/or reception) of the SSB between the TN and NTN. Considering tight synchronization requirements, it is beneficially suggested that the TN transmits part of the SSB and the NTN transmits the remaining part (that is, the TN and NTN transmit non-overlapping parts of the SSB). In embodiments, the TN and NTN transmit at the same frequency (same carrier frequency and/or same frequency range); that is, the transmission between the TN and NTN is time-division multiplexed (TDM). Optionally in such implementations, there is also some frequency-division multiplexing, in that the NTN only transmits subcarriers not being transmitted by the TN at that time. However (as discussed further below), other implementations are possible.

In particular, it is proposed for the NTN to transmit the PSS part of SSB. As noted above, the PSS can be transmitted with an EPRE that is 3dB higher than the EPRE of the remainder of the SSB. By transmitting the PSS at the NTN, the overall transmission power of the SSB at the TN can be reduced. Also, the PSS can be transmitted by the NTN at sufficiently high power to mitigate the extra path loss associated with non-terrestrial (especially, satellite) systems. Additionally, the UE may perform measurements for different beams for beamforming procedures at the TN, which as defined in TS 38.215 v.18.4.0, is performed based on either SSS or CSI-RS.

In contrast, the PSS is generally used for initial symbol boundary and coarse frequency synchronization to the NR cell. This can still be obtained when the PSS is transmitted by the NTN at the same frequency as used by the TN, if there is tight synchronization between the TN and the NTN. The information carried by the PSS is only three sequences, so any individual sequence can be mapped to a particular coverage area of the terrestrial network. The UE can then obtain the remaining information from the SSS, allowing the UE to decode the Physical Cell Index (PCI) of a given cell.

In a variant of this approach, the PBCH can also be transmitted over the NTN (together with the PSS). However, this is more complex. The information carried by the PBCH is for a particular cell, so an "indicator" as to the PCI to which the PBCH refers would desirably be added to the PBCH, to allow the UE to decode the information.

The network (from the TN and/or NTN) may also indicate, either as part of the SSB or separately, that the SSB transmission is being split between the TN and NTN. This may allow the UE to check the NTN where appropriate. For instance, the UE may deactivate portions of the radio system and/or antenna for NTN communication (in particular, reception) at other times, specifically when the SSB is not being transmitted.

In general terms, there may be considered a method for downlink communication on a cellular network that comprises a TN part and a NTN part. The method comprises: communicating a first portion of a SSB of a downlink from the TN part of the cellular network; and communicating a second portion of the SSB of the downlink, different (in particular, distinct and/or non-overlapping) from the first portion, from the NTN part of the cellular network. In the context of the present disclosure, communicating may comprise (or consist of) transmitting and/or receiving. The method may be implemented at a cellular network controller, configured to control the TN part and the NTN, and/or at a UE.

In implementations, the downlink communication from the TN part and the NTN part uses the same (carrier) frequency. Beneficially, the first portion and the second portion may be transmitted at different times and/or using different subcarriers.

Optionally, the second portion of the SSB of the downlink comprises a PSS. Additionally or alternatively, the first portion of the SSB of the downlink comprises a SSS. In some embodiments, the second portion of the SSB of the downlink comprises a PBCH. In such cases, the PBCH may include an indication of a PCI to which the PBCH applies. Where the SSS is in the first portion of the SSB and the PBCH is in the second portion, the first and second portions may overlap in time, but use different subcarriers.

Access by a UE to the cellular network may be via the TN part. Additionally or alternatively, access by a UE to the cellular network may not be possible via the NTN part in a geographical region covered by the TN part. In such cases, the second portion of the SSB downlink in advantageously applicable to the TN part. In some embodiments, the NTN part has a geographical coverage area overlapping with multiple cells of the TN part. Then, the second portion of the SSB may be applicable to the multiple cells.

The method may further comprise: communicating from the TN part and/or the NTN part an indicator that a portion of the SSB of the downlink is being communicated from the NTN part.

The UE may comprise a first RF interface for communicating with the TN part of the cellular network and a second RF interface for communicating with the NTN part of the cellular network. Then, one of the first and second RF interfaces may be used for accessing the cellular network and the other may be used for receiving the respective portion of the SSB without accessing the cellular network. In such implementations, whichever of the first RF interface or second RF interface that is used for receiving the respective portion of the SSB without accessing the cellular network may be deactivated when not receiving the SSB.

Although specific implementations are discussed, it will be appreciated that variations are possible.

For example, in an alternative embodiment, a system is also proposed where the TN would transmit part of a SSB for the NTN. In other words, the UE would normally access the cellular network through the NTN, but is located in a geographical region where the TN provides some overlapping coverage and can therefore assist in improving access for the UE. For example, the NTN can transmit the PSS of the SSB with the remaining SSB parameters (SSS and PBCH) being transmitted by the NTN. For instance, this approach can be adopted as a fallback mechanism, in case the timing requirements are not met for the initial synchronization.

In another option, the TN and NTN downlinks are not co-frequency (that is, they use different frequencies). Then, the portions of the SSB transmitted by the TN and NTN may be transmitted at the same time.

Returning to the general sense of the disclosure, as discussed above, further advantageous and/or optional implementation details may considered.

For instance, access by a UE to the cellular network may be via the NTN part. Then, the first portion of the SSB downlink is advantageously applicable to the NTN part.
In such cases, the first portion of the SSB of the downlink may comprise a PSS for the NTN part.

Any implementation according to the disclosure may comprise hardware and/or software, for example a computer system and/or generic or bespoke hardware. This may be implemented as a controller as part of a network element within standard cellular network architecture and/or in a network element separate from existing architecture.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

## Claims

1. A method for downlink communication on a cellular network that comprises a Terrestrial Network (TN) part and a Non-Terrestrial Network (NTN) part, the method comprising:
communicating a first portion of a Synchronization Signal Block (SSB) of a downlink from the TN part of the cellular network; and
communicating a second portion of the SSB of the downlink, different from the first portion, from the NTN part of the cellular network.

2. The method of claim 1, wherein the second portion of the SSB of the downlink comprises a Primary Synchronization Signal (PSS) and/or wherein the first portion of the SSB of the downlink comprises a Secondary Synchronization Signal (SSS).

3. The method of claim 1 or claim 2, wherein the second portion of the SSB of the downlink comprises a Physical Broadcast Channel (PBCH).

4. The method of claim 3, wherein the PBCH includes an indication of a Physical Cell Index (PCI) to which the PBCH applies.

5. The method of any preceding claim, wherein access by a User Equipment (UE) to the cellular network is via the TN part and/or wherein access by a UE to the cellular network is not possible via the NTN part in a geographical region covered by the TN part.

6. The method of claim 5, wherein the second portion of the SSB downlink is applicable to the TN part.

7. The method of claim 6, wherein the NTN part has a geographical coverage area overlapping with multiple cells of the TN part, the second portion of the SSB being applicable to the multiple cells.

8. The method of any of claims 1 to 4, wherein access by a UE to the cellular network is via the NTN part, the first portion of the SSB downlink being applicable to the NTN part.

9. The method of claim 8, wherein the first portion of the SSB of the downlink comprises a PSS for the NTN part.

10. The method of any preceding claim, further comprising:
communicating from the TN part and/or the NTN part an indicator that a portion of the SSB of the downlink is being communicated from the NTN part.

11. The method of any preceding claim, wherein the downlink communication from the TN part and the NTN part uses the same frequency.

12. A cellular network controller, configured to control a Terrestrial Network (TN) part and a Non-Terrestrial Network (NTN) part of the cellular network to operate in accordance with the method of any preceding claim.

13. A User Equipment (UE) for a cellular network, configured to operate in accordance with the method of any preceding claim, wherein the communicating comprises receiving.

14. The UE of claim 13, comprising a first RF interface for communicating with the TN part of the cellular network and a second RF interface for communicating with the NTN part of the cellular network and wherein one of the first and second RF interfaces is used for accessing the cellular network and the other is used for receiving the respective portion of the SSB without accessing the cellular network.

15. The UE of claim 14, wherein the first RF interface or second RF interface that is used for receiving the respective portion of the SSB without accessing the cellular network is deactivated when not receiving the SSB.
